# FASCICULE DE BREVET EUROPEEN

(11) **EP 2 299 553 B1**
(45) Date de publication et mention de la délivrance du brevet: **28.10.2015**
(21) Numéro de dépôt: 10290457.0
(22) Date de dépôt: 26.08.2010
(51) Int. Cl.: H02B 1/46

(54) **Coffret électrique à fixer à une paroi**
Elektrischer Verteilerkasten zum Befestigen an einer Wand
Wall-mounted electrical box

(30) Priorité: 16.09.2009 FR 0904425
(43) Date de publication de la demande: 23.03.2011
(73) Titulaire: Legrand France, 87000 Limoges (FR); Legrand SNC, 87000 Limoges (FR)
(72) Inventeur: Rejou, Etienne, 87170 Isles (FR); Auvray, Christophe, 87240 Saint Sylvestre (FR)
(74) Mandataire: Orsini, Fabienne

(56) Documents cités:
- DE-B- 1 122 868
- DE-B1- 1 553 594

## Description

### DOMAINE TECHNIQUE AUQUEL SE RAPPORTE L'INVENTION

La présente invention concerne de manière générale les coffrets électriques à encastrer ou à rapporter en saillie sur une paroi tels que, dans le domaine tertiaire, les coffrets de distribution électrique pour fusibles, coupe-circuits, ou disjoncteurs, et les appareils électriques du type interrupteur, va-et-vient ou prise de courant.

Elle concerne plus particulièrement un coffret électrique tel que défini dans la partie préambule de la revendication 1.

Elle concerne également une vis de fixation telle que définie dans la partie préambule de la revendication 9.

### ARRIÈRE-PLAN TECHNOLOGIQUE

On connaît du document FR 2 604 592 un coffret électrique du type précité.

Le socle, ouvert vers l'avant, comporte un fond bordé de quatre parois latérales, et le capot comporte en correspondance une paroi principale avant bordée également par quatre parois latérales. Des fûts d'accueil des vis de fixation s'étendent à partir de la paroi principale avant du capot tandis que les puits taraudés s'étendent à partir du fond du socle en direction de son ouverture.

Un tel coffret est généralement livré avec des vis de fixation déjà montées de manière imperdable dans les fûts d'accueil du capot de telle sorte que leurs extrémités filetées font saillie à l'extérieur du capot, prêtes à être engagées dans les puits taraudés du socle.

De manière usuelle, on fixe le socle sur une paroi verticale, après quoi on rapporte le capot sur le socle de telle manière que les parois latérales du capot s'alignent avec les parois latérales du socle et que les fûts d'accueil du capot se positionnent dans le prolongement des puits taraudés du socle.

Lorsque l'installateur cherche à centrer le capot en face du socle, les extrémités filetées des vis de fixation, qui dépassent des fûts du capot, viennent interférer avec les parois du socle, ce qui rend l'assemblage difficile.

Par ailleurs, une fois que le capot est correctement centré en regard du socle, les vis de fixation empêchent le capot de venir au contact du socle. Il est alors nécessaire de visser les vis dans leurs puits taraudés pour rapprocher le capot du socle. Cette opération de vissage s'avère toutefois compliquée puisque, lorsque l'installateur visse une première vis de fixation, les autres vis de fixation ont tendance à s'incliner et à se bloquer dans leurs puits taraudés.

On connaît par ailleurs du document DE 1 122 868 un coffret électrique comportant un socle, un capot à rapporter sur le socle et quatre vis de fixation d'architectures singulières.

Dans ce document, chacune des vis de fixation comprend une tête agencée pour venir en appui contre une portée correspondante du capot, et un corps agencé pour se visser dans un puits de vissage prévu dans le socle. Le corps de chaque vis de fixation présente une collerette d'imperdabilité qui est agencée pour coopérer avec une butée complémentaire du capot.

Il est par ailleurs prévu un ressort enfilé sur le corps de la vis de fixation, qui s'interpose entre la tête de la vis de fixation et la portée correspondante du capot. Ce ressort permet ainsi de retenir la tête de la vis de fixation à distance de la portée correspondante du capot, ce qui facilite la mise en place du capot sur le socle du coffret électrique.

Cette solution à base de ressorts n'est toutefois pas satisfaisante à bien des égards.

Le ressort forme en effet une pièce supplémentaire dans le coffret électrique, qui est onéreuse à fabriquer et qui accroît sensiblement les difficultés et le coût d'assemblage du coffret électrique.

Par ailleurs, une fois le coffret électrique assemblé, le ressort génère constamment une force de rappel de la vis de fixation en position sortie, ce qui ne facilite pas le vissage de cette vis de fixation dans le puits de vissage correspondant. On comprend en effet que cette opération de vissage est délicate lorsqu'il s'agit de pousser la vis de fixation avec l'extrémité d'un tournevis engagée dans l'emprunte de la tête de la vis de fixation.

### OBJET DE L'INVENTION

Par rapport à l'état de la technique, la présente invention propose un coffret électrique peu onéreux et agencé de telle sorte que son installation soit facilitée.

Plus particulièrement, on propose selon l'invention un coffret électrique tel que défini dans la revendication 1.

Ainsi, grâce à l'invention, tant que les moyens de retenue ne sont pas désengagés, ils retiennent chaque vis de fixation de telle sorte que son extrémité filetée reste entièrement logée, ou presque, à l'intérieur du fût d'accueil prévu à cet effet dans le capot, de manière à ne pas gêner l'installation du capot sur le socle.

Le caractère désengageable de ces moyens de retenue permet ensuite de pousser chaque vis de fixation de telle manière que son extrémité filetée fasse saillie hors du capot pour se visser dans le puits taraudé correspondant du socle.

Selon une première caractéristique avantageuse de l'invention, les moyens de retenue comportent un second filetage.

Pour désengager les moyens de retenue de chaque vis de fixation de ladite seconde butée du capot afin que cette vis de fixation vienne en prise avec le puits taraudé correspondant du socle, il suffit alors à l'installateur de visser ladite vis dans le fût du capot. La manière de procéder pour installer le capot ne diffère donc pas de celle dont il a l'habitude.

A l'inverse, pour démonter le capot, l'installateur procède comme il en a l'habitude, en dévissant chaque vis de fixation qui rentre alors à l'intérieur du fût correspondant du capot en coopérant de nouveau avec ladite seconde butée du capot pour retrouver sa position initiale engagée. Le capot est donc ainsi à nouveau prêt à l'usage.

D'autres caractéristiques avantageuses et non limitatives du coffret électrique conforme à l'invention sont définies dans les revendications 3 à 8.

L'invention concerne également une vis de fixation telle que définie dans les revendications 9 à 11.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique en coupe d'un capot et d'un socle d'un coffret électrique selon l'invention,
- la figure 2 est une vue schématique en perspective d'un coin du capot de la figure 1,
- la figure 3 est une vue schématique en coupe selon le plan A-A de la figure 2,
- la figure 4 est une vue schématique en perspective d'une vis de fixation selon l'invention, permettant la fixation du capot sur le socle de la figure 1,
- la figure 5 est une vue schématique en perspective partiellement coupée d'un fût d'accueil de la vis de fixation de la figure 4,
- la figure 6 est une vue schématique en coupe de la vis de fixation de la figure 4 engagée dans le fût d'accueil de la figure 5,
- la figure 7 est une vue schématique en perspective partiellement coupée d'une variante de réalisation du fût d'accueil de la figure 5,
- les figures 8A à 8F sont des schémas de montage de la vis de fixation de la figure 4 dans le fût d'accueil de la figure 5,
- la figure 9 est une vue schématique en perspective d'une charnière du capot de la figure 1, et d'un couvercle monté sur cette charnière, et
- les figures 10 et 11 sont des vues schématiques en coupe selon le plan B-B de la figure 10, sur lesquelles le couvercle est représenté avec deux inclinaisons différentes.

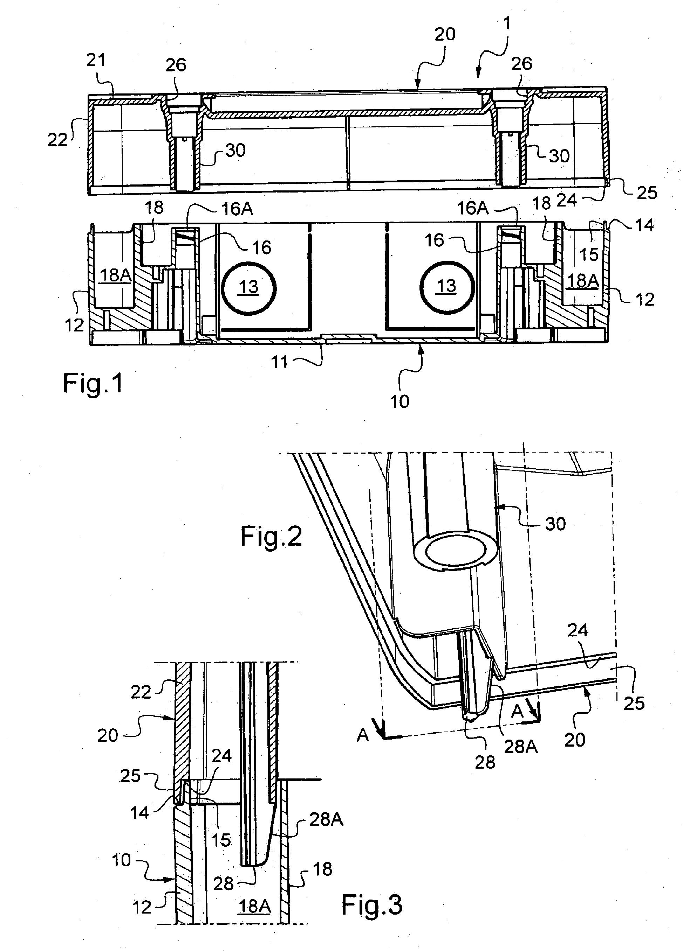

Sur la figure 1, on a représenté schématiquement un coffret électrique 1. Ce coffret électrique 1 est ici un coffret de distribution logeant et protégeant différents appareillages électriques tels que des disjoncteurs, des fusibles et des coupe-circuits.

En variante, on pourrait prévoir que ce coffret électrique soit un appareillage électrique logeant différents mécanismes d'appareillage tels que des mécanismes de prise de courant, d'interrupteur ou de va-et-vient.

Un tel coffret électrique 1 peut être disposé en saillie sur une paroi verticale ou peut être encastré dans un trou d'encastrement prévu dans une telle paroi.

Le coffret électrique 1 se présente ici en deux parties, dont un socle 10 destiné à être monté sur ou dans la paroi, et un capot 20 à rapporter sur le socle 10.

Le socle 10, ouvert à l'avant, comporte une paroi de fond 11 rectangulaire et quatre parois latérales 12 rectangulaires qui s'élèvent à partir du bord de la paroi de fond 11, perpendiculairement à celle-ci. La paroi de fond 11 et les parois latérales 12 comprennent des opercules défonçables 13 pour l'insertion de câbles électriques dans le socle 10. Les parois latérales 12 présentent quatre bords libres qui définissent ensemble le bord périphérique 14 du socle 10.

Le capot 20 comporte une paroi avant 21 rectangulaire et quatre parois latérales 22 qui s'étendent à partir du bord de la paroi avant 21, perpendiculairement à celle-ci. Les parois latérales 22 présentent quatre bords libres qui définissent ensemble le bord périphérique 24 du capot 20.

Les bords périphériques 14, 24 du socle 10 et du capot 20 sont ici équipés de nervures 15, 25 de formes complémentaires à rapporter l'une contre l'autre pour maintenir le capot 20 centré sur le socle 10.

Tels que représentés sur les figures 1 à 3, le socle 10 et le capot 20 comportent des moyens de centrage 18, 28 agencés pour guider la nervure 25 du bord périphérique 24 du capot 20 au droit de la nervure 15 du bord périphérique 14 du socle 10.

Ici, ces moyens de centrage comportent quatre languettes 28 qui s'étendent à partir des quatre coins de la face arrière de la paroi avant 21 du capot 20, perpendiculairement à celle-ci, en direction de la paroi de fond 11 du socle 10. Ces languettes 28 font saillie au-delà du bord périphérique 24 du capot 20.

Ces moyens de centrage comportent en outre quatre logements 18A délimités par les parois latérales 12 et par des cloisons intérieures 18 du socle 10, qui s'étendent aux quatre coins du socle 10. Ces logements 18A sont agencés de telle manière qu'une fois les quatre languettes 28 du capot 20 engagées dans ces quatre logements 18A, le capot 20 soit centré en vis-à-vis du socle 10. L'engagement de la nervure 25 du bord périphérique 24 du capot 20 dans la nervure 15 du bord périphérique 14 du socle 10 est ainsi rendu plus aisé.

Ici, les languettes 28 présentent des bords d'extrémité 28A biseautés, qui forment des rampes de guidage pour faciliter l'insertion des languettes 28 dans les logements 18A.

Comme le montre la figure 1, le socle 10 comporte quatre puits taraudés 16 qui s'élèvent à partir de sa paroi de fond 11 en direction de son ouverture avant, jusqu'à hauteur de son bord périphérique 14. Ces quatre puits taraudés 16 sont respectivement placés à proximité des quatre coins du socle 10. Chaque puits taraudé 16 présente un filetage intérieur qui s'étend à partir de son entrée 16A située du côté de son extrémité libre, en direction de la paroi de fond 11.

La paroi avant 21 du capot 20 comporte quant à elle quatre ouvertures 26 bordées en face arrière par quatre fûts 30 tubulaires. Ces quatre fûts 30 s'étendent perpendiculairement à la paroi avant 21, jusqu'à hauteur du bord périphérique 24 du capot 20. Ils présentent des diamètres égaux aux diamètres des puits taraudés 16 du socle 10 et sont situés aux quatre coins du capot 20 de telle manière qu'une fois le capot 20 centré sur le socle 10, les fûts 30 s'étendent dans le prolongement des puits taraudés 16 du socle 10.

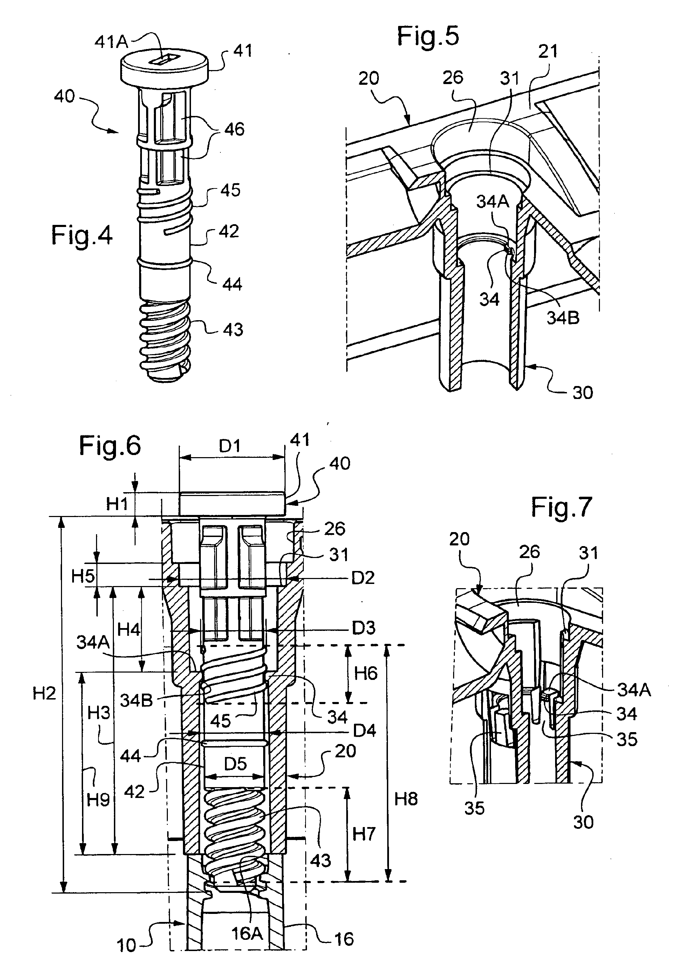

Comme le montrent les figures 4 et 5, le coffret électrique 1 comporte par ailleurs quatre vis de fixation 40 à engager dans les quatre fûts 30 du capot 20. Chaque vis de fixation 40 comprend une tête 41 présentant une empreinte 41A pour tournevis plat, et un corps 42.

La tête 41 de chaque vis de fixation 40 est agencée pour venir en appui contre une portée complémentaire 31 du capot 20. Ici, cette portée complémentaire 31 est formée par un rétrécissement de section intérieure du fût 30 correspondant du capot 20.

Le corps 42 de chaque vis de fixation 40 présente quant à lui, d'une part, une extrémité libre portant un premier filetage 43 à visser dans le puits taraudé 16 correspondant du socle 10, et, d'autre part, une collerette d'imperdabilité 44.

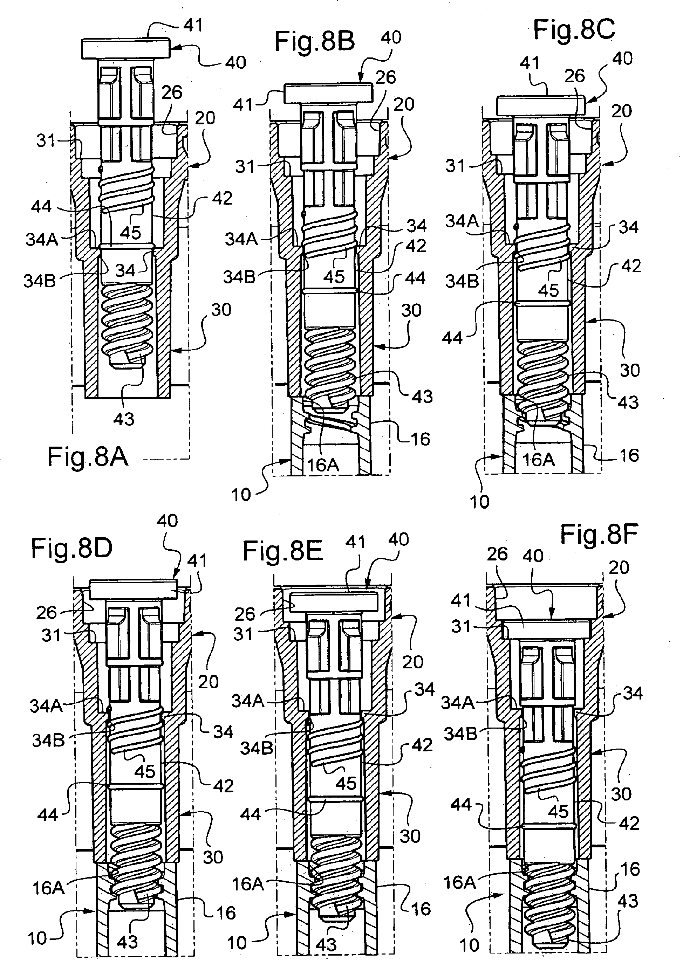

Cette collerette d'imperdabilité 44 est située entre la tête de vis et le premier filetage 43, à distance de ces derniers. Elle est située sur le corps 42 de la vis de fixation 40 de manière à pouvoir coopérer avec une première butée 34B située à l'intérieur du fût 30 correspondant du capot 20. Comme le montrent les figures 8A et 8B, une fois cette collerette d'imperdabilité 44 engagée dans le fût 30 au-delà de ladite première butée 34B, elle retient la vis de fixation 40 sur le capot 20, ce qui évite de la perdre.

Selon une caractéristique particulièrement avantageuse de l'invention, comme le montrent les figures 4 et 5, le corps 42 de chaque vis de fixation 40 comporte, entre la collerette d'imperdabilité 44 et la tête 41 de la vis, des moyens de retenue 45 agencés pour coopérer de manière désengageable avec une seconde butée 34A complémentaire du capot 20 afin de maintenir la tête 41 de la vis de fixation 40 à distance de la portée complémentaire 31 du capot 20.

Ces moyens de retenue comportent ici de manière préférentielle un second filetage 45 situé à distance de la tête 41 et de la collerette d'imperdabilité 44 de la vis de fixation 40.

Les première et seconde butées 34A, 34B sont quant à elles respectivement formées par les faces arrière et avant de deux ergots 34 qui s'étendent en saillie à l'intérieur de chaque fût 30 du capot 20.

Ici, ces ergots 34 présentent des hauteurs égales, au jeu près, au pas du second filetage 45 de la vis de fixation 40, ce qui permet de visser ce second filetage 45 sur les ergots 34. Les ergots 34 du capot 20 permettent ainsi de retenir les vis de fixation 40 à la hauteur souhaitée, de telle sorte que leurs extrémités filetées restent entièrement logées à l'intérieur des fûts 30, de manière à ne pas gêner l'installation du capot 20 contre le socle 10.

Bien sûr, cette forme de moyens de retenue n'est pas limitative. Ces moyens de retenue pourraient en effet être formés par une simple collerette identique à la collerette d'imperdabilité, située à une hauteur différente de celle-ci le long du corps de la vis de fixation. Ils pourraient également être formés par des moyens à coopération de forme, par exemple du genre à baïonnettes, ou par tout autre élément en saillie du corps de la vis.

Ici, les premier et second filetages 43, 45 de la vis de fixation 40 présentent des sens identiques. De cette manière, pour rapporter le capot 20 sur le socle 10, l'installateur procède comme il en a l'habitude, c'est-à-dire en vissant normalement les vis de fixation 40 sans que la présence du second filetage 45 ne nécessite une adaptation de l'opération de montage.

Avantageusement, les premier et second filetages 43, 45 de la vis de fixation 40 présentent des pas identiques et, comme le montre la figure 6, la distance H8 séparant les extrémités opposées des premier et second filetages 43, 45 est strictement supérieure à la distance H9 séparant, en position assemblée, l'ergot 34 et l'entrée 16A du puits taraudé 16 correspondant du socle 10.

De cette manière, comme le montrent les figures 8C et 8D, lorsque l'installateur dévisse l'une des vis de fixation 40, les deux filetages 43, 45 de cette vis de fixation 40 sont à un moment donné tous deux en prise, l'un avec les ergots 34 et l'autre avec le filetage intérieur du puits taraudé 16.

Par conséquent, au dévissage, chaque vis de fixation 40 revient automatiquement en position initiale, engagée à l'intérieur du fût 30 correspondant du capot 20. Plus précisément, lorsque l'installateur démonte le capot 20 du socle 10 en dévissant les vis de fixation 40, il réengage automatiquement ces vis de fixation 40 à l'intérieur des fûts 30, sans opération supplémentaire, si bien que le capot 20 est à nouveau prêt à être monté sur un socle.

Les dimensions préférentielles en millimètres des fûts 30 du capot 20 et des vis de fixation 40, référencées sur la figure 6, sont les suivantes : H1 = 4 ; H2 = 64 ; H3 = 45,5 ; H4 = 14,5 ; H5 = 4 ; H6 = 9,8 ; H7 = 16 ; D1 = 17,4 ; D2 = 17,75 ; D3 = 11 ; D4 = 11,4 ; D5 = 10.

L'assemblage du coffret électrique 1 est réalisé de la manière suivante.

Comme le montre la figure 8A, les vis de fixation 40 sont tout d'abord engagées dans les fûts 30 du capot 20, jusqu'à une position dans laquelle les collerettes 44 et les seconds filetages 45 des vis s'étendent de part et d'autre des ergots 34 des fûts 30, ce qui assure l'imperdabilité des vis.

Dans cette position, les moyens de retenue (en l'espèce, le second filetage 45) qui permettent de retenir la tête 41 de chaque vis de fixation 40 à distance des portées complémentaires 31 du capot 20 sont dits engagés, en ce sens qu'ils permettent de maintenir l'extrémité libre de chaque vis de fixation 40 à l'intérieur du fût 30 correspondant du capot 20.

L'installateur peut ainsi rapporter le capot 20 sur le socle 10 placé verticalement sur la paroi, sans que les vis de fixation 40 ne viennent interférer avec le socle 10.

Comme le montre la figure 8B, l'installateur peut ensuite commencer à visser chaque vis de fixation 40 de manière que son second filetage 45 vienne en prise avec les ergots 34 du fût 30 correspondant du capot 20.

Comme le montrent les figures 8C et 8D, cette opération de vissage permet de faire sortir les extrémités libres des vis de fixation 40 en dehors des fûts 30, de manière que leurs premiers filetages 43 puissent venir en prise avec les filetages intérieurs des puits taraudés 16 du socle 10. Une fois ces premiers filetages 43 en prise, les seconds filetages 45 se désengagent des ergots 34. On dit alors que les moyens de retenue sont désengagés.

En effet, comme le montrent les figures 8E et 8F, les seconds filetages 45 n'empêchent plus les têtes 41 des vis de fixation 40 de venir au contact des portées complémentaires 31 du capot 20.

Selon une variante particulièrement avantageuse de l'invention représentée sur la figure 7, on peut prévoir que les ergots 34 soient portés par des pattes élastiquement déformables 35 en flexion, découpées dans les parois latérales des fûts 30.

Grâce à ces pattes élastiquement déformables 35, les ergots 34 peuvent se déplacer entre deux positions, dont une position de repos dans laquelle ils s'étendent en saillie à l'intérieur du fût 30 correspondant du capot 20, et une position rétractée dans laquelle ils s'étendent en retrait, dans le prolongement de la paroi latérale de ce fût 30.

Ces pattes élastiquement déformables 35 facilitent ainsi la mise en place des vis de fixation 40 dans les fûts 30 du capot 20 dans la mesure où l'effort nécessaire pour faire passer les collerettes d'imperdabilité 44 des vis de fixation 40 au-delà des ergots 34 est réduit.

Elles facilitent également le désengagement desdits moyens de retenue dans la mesure où il est possible, en exerçant un effort de pression axial important sur la tête 41 de chaque vis de fixation 40, de faire passer le second filetage 45 de cette vis au-delà de l'ergot 34, sans visser la vis de fixation 40.

Dans cette variante, l'assemblage du coffret électrique 1 est réalisé de la manière suivante.

Après que les vis de fixation 40 ont été engagées de manière imperdable dans les fûts 30 du capot 20, l'installateur rapporte le capot 20 sur le socle 10 placé verticalement sur la paroi, sans que les vis de fixation 40 ne viennent interférer avec le socle 10. Il pousse ensuite les vis de fixation 40 dans leurs fûts 30 de manière que leurs seconds filetages 45 passent au-delà des ergots 34 grâce à la souplesse des pattes élastiquement déformables 35. Ainsi, les seconds filetages 45 n'empêchent plus les têtes 41 des vis de fixation 40 de venir au contact des portées complémentaires 31 du capot 20. Enfin, l'installateur procède au vissage de ces vis de fixation 40 dans les puits taraudés 16 du socle 10, de manière à rigidement assembler le capot 20 au socle 10.

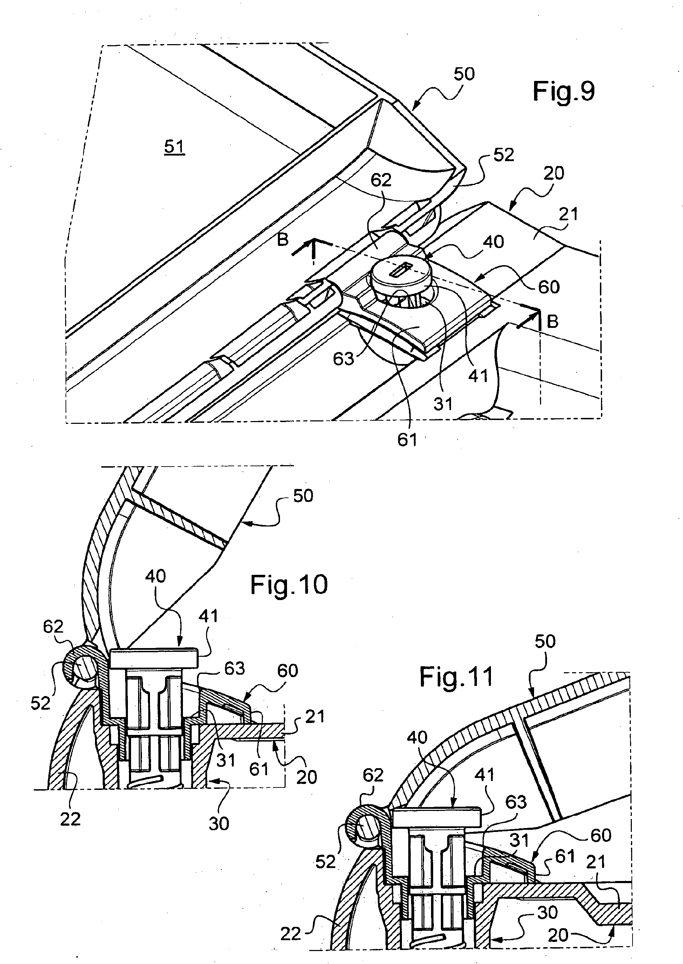

Tel que représenté sur les figures 9 à 11, le coffret électrique 1 comporte un couvercle 50 monté à pivotement sur le capot 20.

Ce couvercle 50 comporte une paroi principale 51 bombée de contour rectangulaire.

Le capot 20 comporte quant à lui deux charnières 60 (dont une seule d'entre elles est représentée sur les figures). Ces charnières 60 se présentent chacune en deux parties.

L'une de ces parties 61, dite partie fixe, se présente sous la forme d'une plaque rectangulaire agencée pour s'appliquer sur la face avant de la paroi avant 21 du capot 20. Elle présente une ouverture centrale 63 bordée en face arrière par une couronne adaptée à être engagée dans l'entrée de l'un des fûts 30 du capot 20. La vis de fixation 40, une fois engagée au travers de l'ouverture 63 de la charnière 60 et du fût 30 correspondant du capot 20, permet alors de maintenir la charnière 60 sur le capot 20 en prenant appui sur celle-ci. Cette partie fixe 61 de la charnière 60 forme ainsi une portée d'appui pour la tête 41 de la vis de fixation 40.

L'autre de ces parties 62, dite partie d'accroche, se présente sous la forme d'un crochet à fixer sur une tige 52 longeant l'un des bords du couvercle 50. Cette partie d'accroche 62 permet ainsi d'articuler le couvercle 50 sur le capot 20 entre une position ouverte dans laquelle il laisse accès aux appareillages électriques logés dans le coffret électrique 1, et une position fermée dans laquelle il interdit cet accès.

Avec de telles charnières 60, il peut arriver que l'installateur referme par mégarde le couvercle 50 alors même que les vis de fixation 40 ne sont pas encore vissées dans les puits taraudés 16 du socle 10. Comme le montre plus particulièrement la figure 11, le couvercle 50 vient alors appuyer sur les têtes 41 des vis de fixation 40.

Grâce à la souplesse des pattes élastiquement déformables 35 qui s'étendent à l'intérieur de chaque fût 30 du capot 20, les seconds filetages 45 des vis de fixation 40 passent au-delà des ergots 34 embarqués sur les pattes élastiquement déformables 35, ce qui permet aux vis de fixation 40 de descendre dans leurs fûts 30, en évitant ainsi aux charnières 60 de se briser.

## Revendications

1. Coffret électrique (1) à fixer à une paroi quelconque, comportant un socle (10), un capot (20) à rapporter sur le socle (10), et au moins une vis de fixation (40) du capot (20) sur le socle (10) qui comprend :
- une tête (41) agencée pour venir en appui contre une portée complémentaire (31) du capot (20), et
- un corps (42) présentant, d'une part, une extrémité libre portant un premier filetage (43) à visser dans un puits taraudé (16) du socle (10), et, d'autre part, une collerette d'imperdabilité (44) qui est située entre la tête (41) de la vis de fixation (40) et ledit premier filetage (43) et qui est agencée pour coopérer avec une première butée (34B) complémentaire du capot (20),
**caractérisé en ce que** le corps (42) de la vis de fixation (40) comporte, entre ladite collerette d'imperdabilité (44) et ladite tête (41), des moyens de retenue (45) agencés pour coopérer de manière désengageable avec une seconde butée (34A) complémentaire du capot (20) afin de maintenir la tête (41) de la vis de fixation (40) à distance de la portée complémentaire (31) du capot (20).

2. Coffret électrique (1) selon la revendication 1, dans lequel lesdits moyens de retenue comportent un second filetage (45).

3. Coffret électrique (1) selon la revendication 2, dans lequel lesdits premier et second filetages (43, 45) présentent des sens identiques.

4. Coffret électrique (1) selon la revendication 3, dans lequel lesdits premier et second filetages (43, 45) présentent des pas identiques et dans lequel la distance (H8) séparant les extrémités opposées desdits premier et second filetages (43, 45) est supérieure ou égale à la distance (H9) séparant, en position assemblée, ladite seconde butée (34A) et l'entrée dudit puits taraudé (16).

5. Coffret électrique (1) selon l'une des revendications 1 à 4, dans lequel ladite seconde butée (34A) est portée par une patte élastiquement déformable (35) entre deux positions, dont une position de repos dans laquelle la seconde butée (34A) s'étend en saillie du lieu de passage de la vis de fixation (40), et une position rétractée dans laquelle la seconde butée (34A) s'étend en retrait du lieu de passage de la vis de fixation (40).

6. Coffret électrique (1) selon l'une des revendications 1 à 5, dans lequel le capot (20) et le socle (10) présentent des bords périphériques (14, 24) équipés de nervures (15, 25) de formes complémentaires à rapporter l'une contre l'autre et dans lequel il est prévu des moyens de centrage (18, 28) du bord périphérique (24) du capot (20) au droit du bord périphérique (14) du socle (10).

7. Coffret électrique (1) selon la revendication 6, dans lequel les moyens de centrage comportent au moins deux logements (18A) et au moins deux languettes (28) à engager dans lesdits logements (18A), les uns s'étendant sur le capot (20) et les autres s'étendant sur le socle (10).

8. Coffret électrique (1) selon l'une des revendications 1 à 7, dans lequel le capot (20) comporte une charnière (60) dont une partie fixe (61) forme ladite portée d'appui (31) et dont une autre partie (62) supporte un couvercle (50).

9. Vis de fixation (40) d'un capot (20) sur un socle (10) de coffret électrique (1), comportant une tête (41) et un corps (42) qui présente, d'une part, une extrémité libre portant un premier filetage (43), et, d'autre part, une collerette d'impeccabilité (44) située entre ladite tête (41) et ledit premier filetage (43), **caractérisée en ce que** ledit corps (42) comporte, entre ladite collerette (44) et ladite tête (41), des moyens de retenue (45) en saillie vers l'extérieur du corps (42).

10. Vis de fixation (40) selon la revendication 9, dans laquelle ledit élément en saillie est un second filetage (45).

11. Vis de fixation (40) selon la revendication 10, lesdits premier et second filetages (43, 45) présentent des sens et des pas identiques.

## Patentansprüche

1. Elektrischer Anschlusskasten (1), an einer beliebigen Wand zu fixieren und umfassend: einen Sockel (10), eine, auf den Sockel (10) aufzusetzende Abdeckung (20), und mindestens eine Befestigungsschraube (40) zur Befestigung der Abdeckung (20) auf dem Sockel (10), die umfasst:
- einen zum Aufdrücken auf eine ergänzende Auflagefläche (31) der Abdeckung (20) angeordneten Kopf (41), und
- einen Körper (42), der zum einen ein freies Ende mit einem ersten Gewinde (43) aufweist, das in eine Gewindeführung (16) des Sockels (10) zu schrauben ist, und zum anderen einen Ring (44), damit die Schraube unverlierbar ist, der sich zwischen dem Kopf (41) der Befestigungsschraube (40) und dem ersten Gewinde (43) befindet und angeordnet ist, um mit einem ersten ergänzenden Anschlag (34B) der Abdeckung (20) zusammenzuwirken,
**dadurch gekennzeichnet, dass** der Körper (42) der Befestigungsschraube (40) zwischen dem Ring (44), der die Schraube unverlierbar macht, und dem Kopf (41) Rückhaltemittel (45) aufweist, die angeordnet sind, um auf eine nicht lösbare Art mit einem zweiten ergänzenden Anschlag (34A) der Abdeckung (20) zusammenzuwirken, um den Kopf (41) der Befestigungsschraube (40) von der ergänzenden Auflagefläche (31) der Abdeckung (20) entfernt zu halten.

2. Elektrischer Anschlusskasten (1) nach Anspruch 1, bei dem die Rückhaltemittel ein zweites Gewinde (45) umfassen.

3. Elektrischer Anschlusskasten (1) nach Anspruch 2, bei dem das erste und zweite Gewinde (43,45) identische Gewinderichtungen aufweisen.

4. Elektrischer Anschlusskasten (1) nach Anspruch 3, bei dem das erste und zweite Gewinde (43,45) identische Gewindesteigungen aufweisen und bei dem der Abstand (H8) zwischen den gegenüberliegenden Enden des ersten und zweiten Gewindes (43,45) größer gleich dem Abstand (H9) ist, der in montierter Position den zweiten Anschlag (34A) und die Öffnung der Gewindeführung (16) voneinander trennt.

5. Elektrischer Anschlusskasten (1) nach einem der Ansprüche 1 bis 4, bei dem der zweite Anschlag (34A) von einer zwischen zwei Positionen elastisch verformbaren Klammer (35) getragen wird, darunter eine Ruheposition, in der sich der zweite Anschlag (34A) von der Durchlassstelle der Befestigungsschraube (40) wegstehend erstreckt, und eine eingezogene Position, in der sich der zweite Anschlag (34A) von der Durchlassstelle der Befestigungsschraube (40) zurückstehend erstreckt.

6. Elektrischer Anschlusskasten (1) nach einem der Ansprüche 1 bis 5, bei dem die Abdeckung (20) und der Sockel (10) periphere Ränder (14, 24) mit Rippen (15, 25) mit sich ergänzenden Formen aufweisen, die aneinander zu stecken sind, und bei dem Mittel zum Zentrieren (18, 28) des peripheren Rands (24) der Abdeckung (20) direkt vor dem peripheren Rand (14) des Sockels (10) vorgesehen sind.

7. Elektrischer Anschlusskasten (1) nach Anspruch 6, bei dem die Mittel zum Zentrieren mindestens zwei Aufnahmen (18A) und mindestens zwei Laschen (28) umfassen, die in diese Aufnahmen (18A) eingreifen, wobei sich die einen an der Abdeckung (20) und die anderen auf dem Sockel (10) erstrecken.

8. Elektrischer Anschlusskasten (1) nach einem der Ansprüche 1 bis 7, bei dem die Abdeckung (20) ein Scharnier (60) umfasst, dessen ein fester Abschnitt (61) die Auflagefläche (31) bildet und dessen anderer Abschnitt (62) eine Abdeckung (50) trägt.

9. Befestigungsschraube (40) einer Abdeckung (20) auf einem Sockel (10) eines elektrischen Anschlusskastens (1), die einen Kopf (41) und einen Körper (42) umfasst, der zum einen ein freies Ende mit einem ersten Gewinde (43) aufweist, und zum anderen einen Ring (44), damit die Schraube unverlierbar ist, der sich zwischen dem Kopf (41) und dem ersten Gewinde (43) befindet, **dadurch gekennzeichnet, dass** dieser Körper (42) zwischen diesem Ring (44) und diesem Kopf (41) nach außen des Körpers (42) wegstehende Rückhaltemittel (45) umfasst.

10. Befestigungsschraube (40) nach Anspruch 9, bei der das wegstehende Element ein zweites Gewinde (45) ist.

11. Befestigungsschraube (40) nach Anspruch 10, bei der das erste und zweite Gewinde (43,45) identische Gewinderichtungen und -steigungen aufweisen.

## Claims

1. An electrical box (1) for fastening to any wall, which electrical box includes a base (10), a cover (20) for fitting on the base (10), and at least one fastener screw (40) for fastening the cover (20) on the base (10), which fastener screw comprises:
a head (41) that is arranged to come to bear against a complementary seat (31) of the cover (20); and
a body (42) that presents firstly a free end that carries a first thread (43) for screwing in a tapped hole (16) of the base (10), and secondly a retaining collar (44) that is situated between the head (41) of the fastener screw (40) and said first thread (43), and that is arranged to co-operate with a complementary first abutment (34B) of the cover (20);
the electrical box being **characterized in that**, between said retaining collar (44) and said head (41), the body (42) of the fastener screw (40) includes holding means (45) that are arranged to co-operate in releasable manner with a complementary second abutment (34A) of the cover (20), so as to hold the head (41) of the fastener screw (40) at a distance from the complementary seat (31) of the cover (20).

2. An electrical box (1) according to claim 1, wherein said holding means comprise a second thread (45).

3. An electrical box (1) according to claim 2, wherein the winding directions of said first and second threads (43, 45) are identical.

4. An electrical box (1) according to claim 3, wherein said first and second threads (43, 45) present pitches that are identical, and wherein the distance (H8) between the opposite ends of said first and second threads (43, 45) is greater than or equal to the distance (H9), in the assembled position, between said second abutment (34A) and the inlet of said tapped hole (16).

5. An electrical box (1) according to any one of claims 1 to 4, wherein said second abutment (34A) is carried by a tab (35) that is elastically deformable between two positions, namely a rest position in which the second abutment (34A) projects from the location though which the fastener screw (40) passes, and a retracted position in which the second abutment (34A) is set back from the location though which the fastener screw (40) passes.

6. An electrical box (1) according to any one of claims 1 to 5, wherein the base (10) and the cover (20) present peripheral edges (14, 24) that are fitted with ribs (15, 25) of complementary shape for fitting one against the other, and wherein centering means (18, 28) are provided for centering the peripheral edge (24) of the cover (20) in register with the peripheral edge (14) of the base (10).

7. An electrical box (1) according to claim 6, wherein the centering means comprise at least two housings (18A) and at least two tongues (28) for engaging in said housings (18A), one of the housings and the tongues extending from the cover (20) and the other one of the housings and the tongues extending from the base (10).

8. An electrical box (1) according to any one of claims 1 to 7, wherein the cover (20) includes a hinge (60) having a stationary portion (61) that forms said bearing seat (31), and having another portion (62) that supports a lid (50) .

9. A fastener screw (40) for fastening a cover (20) on a base (10) of an electrical box (1), which fastener screw comprises a head (41) and a body (42) that presents firstly a free end that carries a first thread (43), and secondly a retaining collar (44) that is situated between said head (41) and said first thread (43), the fastener screw being **characterized in that**, between said collar (44) and said head (41), said body (42) includes retaining means (45) that project outwards from the body (42) .

10. A fastener screw (40) according to claim 9, wherein said projecting element is a second thread (45).

11. A fastener screw (40) according to claim 10, said first and second threads (43, 45) present handednesses and pitches that are identical.
